# EUROPÄISCHE PATENTSCHRIFT

(11) **EP 4 219 073 B1**
(45) Veröffentlichungstag und Bekanntmachung des Hinweises auf die Patenterteilung: **09.09.2026**
(21) Anmeldenummer: 22153482.9
(22) Anmeldetag: 26.01.2022
(51) Int. Cl.: B24B 45/00

(54) **ROTATIV ANTREIBBARE DREHWERKZEUGEINRICHTUNG**
ROTATABLE ROTATING TOOL DEVICE
DISPOSITIF OUTIL ROTATIF À ENTRAÎNEMENT ROTATIF

(43) Veröffentlichungstag der Anmeldung: 02.08.2023
(73) Patentinhaber: MONTI-Werkzeuge GmbH, 53773 Hennef (DE)
(72) Erfinder: Hofstee, Sander Hendricus Johannes, 8940 Wervik (BE); Doddema, Jan Frederik, 9765AR Paterswolde (NL)
(74) Vertreter: Andrejewski - Honke Patent- und Rechtsanwälte Partnerschaft mbB

(56) Entgegenhaltungen:
- EP-B1- 1 834 733
- DE-C1- 4 205 265
- GB-A- 2 490 549
- US-A- 4 661 009

## Beschreibung

Die Erfindung betrifft eine rotativ antreibbare Drehwerkzeugeinrichtung, insbesondere ein Rotationsbürstenwerkzeug, mit einem Werkzeughalter mit wenigstens einem antriebsseitigen Spannelement und einem werkzeugseitigen Spannelement, wobei die beiden Spannelemente lösbar miteinander verbunden sind und ein Drehwerkzeug aufnehmen und halten, wobei ferner das werkzeugseitige Spannelement und das antriebseitige Spannelement über eine Bajonettverbindung miteinander gekoppelt sind, und wobei das antriebsseitige Spannelement wenigstens eine Aufnahmenut und das werkzeugseitige Spannelement zumindest einen in die Aufnahmenut eingreifenden Zapfen aufweist, oder umgekehrt.

Das antriebsseitige Spannelement lässt sich beispielsweise über einen Dorn oder dergleichen mit Hilfe einer Drehantriebseinheit in Rotationen versetzen. Demgegenüber dient das werkzeugseitige Spannelement typischerweise dazu, das Drehwerkzeug aufzunehmen und zu halten. Sobald das antriebsseitige Spannelement und das werkzeugseitige Spannelement lösbar miteinander gekoppelt sind, kann folglich mit Hilfe der Drehantriebseinheit über das antriebsseitige Spannelement das werkzeugseitige Spannelement und damit das Drehwerkzeug in die gewünschten Rotationen versetzt werden.

Bei einer rotativ antreibbaren Drehwerkzeugeinrichtung wie sie in der EP 2 371 487 B1 beschrieben wird sind zwei speziell ausgelegte Spannelemente vorgesehen und mit Hilfe eines Verschlusselementes gegen die Kraft wenigstens einer Feder lösbar gekoppelt. Die beiden Spannelemente respektive der zugehörige Werkzeughalter dienen zur Aufnahme des Drehwerkzeuges. Bei dem Drehwerkzeug kann es sich um eine Rotationsbürste mit flexiblem Bürstenband handeln, wie sie beispielsweise in der an dieser Stelle ebenfalls einschlägigen DE 42 05 265 C1 der Anmelderin beschrieben wird. Grundsätzlich kann mit Hilfe des Werkzeughalters aber auch ein Rotationswerkzeug gemäß der EP 1 859 903 B1 aufgenommen werden.

Eine vergleichbare rotativ antreibbare Drehwerkzeugeinrichtung wird in der DE 100 30 586 A1 beschrieben. Hier kommt ein Werkzeug mit einem kreisscheibenförmigen Werkzeugkörper zum Einsatz. Der Werkzeugkörper verfügt über eine zentrale Öffnung zur Befestigung an einer Werkzeugmaschine bzw. allgemein einer Drehantriebseinheit. In der Öffnung ist eine Trageinrichtung vorgesehen, die zumindest an einer Seite des Werkzeugkörpers den Rand der Öffnung übergreift. An der anderen Seite des Werkzeugkörpers ist eine Befestigungseinrichtung vorgesehen, welche sich auf die Werkzeugmaschine aufspannen lässt und an der die Trageinrichtung bei aufgespannter Befestigungseinrichtung lösbar befestigbar ist. Hierdurch wird der Werkzeugkörper insgesamt axial gesichert und drehfest gehalten. Die bekannte Trageinrichtung eignet sich offensichtlich nur in Verbindung mit als Trenn- oder Schleifscheiben ausgelegten kreisscheibenförmigen Werkzeugkörpern.

Rotationsbürstenwerkzeuge sind darüber hinaus aus der Praxis und durch das Schrifttum in vielfältiger Ausgestaltung bekannt. So befasst sich die DE 43 26 793 C1 mit einem rotativ antreibbaren Bürstenaggregat, bei welchem der Bürstenhalter zwei über eine geteilte Distanzbuchse distanzierte Stirnscheiben und die Stirnscheiben in vorgegebenem Abstand zum Buchsenmantel angeordnete und über den Scheibenumfang verteilte Axialstege aufweisen. Die Ringbürste verfügt über ein biegsames Bürstenband mit nach außen abstehenden Borsten und mit borstenfreien Bandzonen für die das Bürstenband übergreifenden Axialstege.

Bei einer rotativ antreibbaren Werkzeugspannvorrichtung entsprechend der EP 0 319 756 A2 wird so vorgegangen, dass zwei Spannscheiben konzentrische Ringnuten zum Einspannen von im Wesentlichen durchmessergleichen Werkzeughülsen aufweisen. Auf diese Weise soll eine einwandfreie Positionierung und Stabilisierung der jeweils eingespannten Werkzeughülse gewährleistet werden, und zwar unter Verzicht auf einen Gummikern oder dergleichen Stützkörper. Schließlich kennt der Stand der Technik noch ein Rotationsbürstenwerkzeug, wie es in der EP 0 347 429 B1 beschrieben wird und beispielhaft zur Oberflächenbearbeitung dient. Dabei ist ein Bürstenbandträger mit einer mehrteiligen Spanneinheit und einem mittels der Spanneinheit rückfedernd aufweitbarem Ringkörper ausgerüstet. Das Rotationsbürstenwerkzeug verfügt außerdem über ein Bürstenband mit flachem Querschnitt, das als geschlossener Ring ausgebildet ist.

Der Bürstenbandträger und das Bürstenband können eine Einheit bilden. Dadurch soll ein vielseitiger Einsatz und eine effektive Wirkung und zugleich Langlebigkeit erreicht werden.

Der nächstkommende Stand der Technik nach der US 4 661 009 A beschäftigt sich mit einer schnell wechselbaren Kupplung für Drehwerkzeugmaschinen. Tatsächlich kommt an dieser Stelle eine Bajonettverbindung zwischen einem antriebsseitigen und einem werkzeugseitigen Spannelement zum Einsatz. Bei dem Drehwerkzeug kann es sich um eine Schleifscheibe oder ein Bohrfutter handeln. Dementsprechend kommt es im Endeffekt auf eine präzise Verbindung beider Spannelemente an.

Der Stand der Technik kann nicht in allen Aspekten zufriedenstellen. So wird beispielsweise bei der DE 42 05 265 C1 oder auch im Rahmen der DE 43 26 793 C1 jeweils mit einem flexiblen Band des Bürstenwerkzeuges gearbeitet. Hierdurch werden zum Teil bewusst Bewegungen des Bürstenbandes gegenüber dem Werkzeughalter für die Bearbeitung ausgenutzt, wie dies in der EP 1 834 733 B1 beschrieben wird. Tatsächlich ist an dieser Stelle ein in den rotierenden Borstenkranz der Ringbürste eintauchendes Stoppmittel vorgesehen. Das Stoppmittel bremst die Borsten für eine bestimmte Zeit ab, so dass nach ihrer Freigabe die hierdurch gespeicherte Bewegungsenergie zur zusätzlich schlagenden Bearbeitung einer Oberfläche eines Werkstückes durch die Borsten genutzt wird. Das setzt eine gewisse Bewegung des flexiblen Bürstenbandes innerhalb des Werkzeughalters voraus.

Bei den in der Praxis eingesetzten Ringbürsten kommt es nun im Zusammenhang mit den beschriebenen Drehwerkzeugeinrichtungen dazu, dass die Ringbürste bzw. ihr Bürstenband nicht exakt "passt" und gegenüber dem Werkzeughalter mehr oder minder unkontrollierte Bewegungen vollführt. Als Folge hiervon wird oftmals ein erhöhter Verschleiß bis hin zur Zerstörung der Ringbürste im Betrieb beobachtet.

Aus diesem Grund geht der weitere Stand der Technik nach der WO 2017/220338 A1 so vor, dass das werkzeugseitige Spannelement und das Drehwerkzeug eine Baueinheit definieren. Dazu ist das betreffende Spannelement als das Drehwerkzeug zumindest teilweise radial und axial umschließender Haltekäfig ausgebildet. Das antriebsseitige Spannelement ist als in den Haltekäfig lösbar eingreifender Halteradapter ausgelegt. Dazu verfügt der Halteadapter über umfangsseitige Sperrstifte, welche in montiertem Zustand des Haltekäfigs am Halteadapter in zugehörige Aufnahmebohrungen im Haltekäfig eingreifen. Das hat sich grundsätzlich bewährt und lässt auch einen schnellen und aufwandsarmen Wechsel des Drehwerkzeuges zu.

Allerdings ergeben sich in der Praxis und bei signifikanten Verschmutzungen Probleme dahingehend, dass der Halteadapter mit seinen umfangsseitigen Sperrstiften nicht oder nur schwierig gegenüber dem Haltekäfig gelöst werden kann. Das lässt sich beispielsweise darauf zurückführen, dass die Sperrstifte durch beispielsweise eindringenden Staub oder Verschmutzung blockiert sind. Hinzu kommt, dass ein in diesem Zusammenhang vorgesehener und die Sperrstifte beaufschlagender Betätigungsknopf ebenfalls durch Staub oder eindringenden Schmutz blockiert ist oder zumindest in seiner Funktionsfähigkeit behindert. Hier will die Erfindung insgesamt Abhilfe schaffen.

Der Erfindung liegt das technische Problem zugrunde, eine derartige rotativ antreibbare Drehwerkzeugeinrichtung so weiterzuentwickeln, dass ein schneller und funktionsgerechter Austausch des werkzeugseitigen Spannelementes mit dem Drehwerkzeug gegenüber dem antriebsseitigen Spannelement auch in verschmutztem Zustand möglich ist und einfach gelingt.

Zur Lösung dieser technischen Problemstellung ist eine gattungsgemäße rotativ antreibbare Drehwerkzeugeinrichtung im Rahmen der Erfindung dadurch gekennzeichnet, dass das werkzeugseitige Spannelement und das Drehwerkzeug eine Baueinheit definieren und das betreffende Spannelement dazu als das Drehwerkzeug zumindest teilweise radial und axial umschließender Haltekäfig ausgebildet ist, wobei der Haltekäfig eine Zentralbohrung mit dem hierin hineinreichenden Zapfen aufweist.

D. h., die lösbare Verbindung zwischen den beiden Spannelementen wird erfindungsgemäß über eine Bajonett-Verbindung realisiert und umgesetzt. Eine solche Bajonett-Verbindung stellt eine schnell herstell- und lösbare mechanische Verbindung zwischen dem antriebsseitigen Spannelement und dem werkzeugseitigen Spannelement zur Verfügung. Dazu werden die beiden

Elemente ineinandergesteckt und durch entgegengesetztes Drehen miteinander verbunden respektive voneinander wieder getrennt. Um die fragliche Drehverbindung bzw. Bajonett-Verbindung zu realisieren, ist das antriebsseitige Spannelement typischerweise zylindrisch ausgelegt, während es sich bei dem werkzeugseitigen Spannelement um eine korrespondierende Zylinderhülse oder Zylinderscheibe handelt.

Im Detail ist hierzu vorgesehen, dass das antriebsseitige Spannelement wenigstens eine Aufnahmenut und das werkzeugseitige Spannelement zumindest einen in die Aufnahmenut eingreifenden Zapfen aufweist. Es kann aber auch umgekehrt vorgegangen werden. In diesem Fall ist das antriebsseitige Spannelement mit dem fraglichen wenigstens einen Zapfen ausgerüstet, welcher seinerseits in die Aufnahmenut im werkzeugseitigen Spannelement eingreift. Die Aufnahmenut als Bestandteil der Bajonett-Verbindung ist in der Regel zumindest zweiteilig mit einer Axialnut und einer hieran anschließenden Radialnut ausgebildet. Meistens ist die Auslegung dann noch so getroffen, dass die Radialnut endseitig in eine Rastnut übergeht. Die Rastnut ist vorteilhaft als parallel zur Axialnut verlaufende Sacknut ausgebildet.

D. h., die Aufnahmenut am antriebsseitigen Spannelement ist im Allgemeinen dreiteilig mit der Axialnut, der hieran anschließenden Radialnut und der endseitig der Radialnut vorgesehenen Rastnut ausgebildet. Auf diese Weise kommt es zu einer kombinierten Bewegung bei der Vereinigung zwischen dem antriebsseitigen Spannelement und dem werkzeugseitigen Spannelement dergestalt, dass hierzu das werkzeugseitige Spannelement mit seinem Zapfen zunächst in die Axialnut eingeführt wird. Das geschieht in der Regel gegen die Kraft wenigstens einer das werkzeugseitige Spannelement beaufschlagenden Feder. Hierbei kommt es zu einer Schiebe- bzw. "Push"-Bewegung.

Sobald der in die Axialnut eingreifende Zapfen eine bestimmte Position oder auch einen Anschlag innerhalb der Axialnut erreicht hat, erfolgt eine Drehbewegung des werkzeugseitigen Spannelementes gegenüber dem antriebsseitigen Spannelement "Turn". Schließlich sorgt endseitig der Radialnut die das werkzeugseitige Spannelement beaufschlagende Feder dafür, dass der Zapfen in die parallel zur Axialnut verlaufende Sacknut bzw. Rastnut eingreift. Hierdurch kommt es zu einem rastenden Verschluss des werkzeugseitigen Spannelementes gegenüber dem antriebsseitigen Spannelement im Sinne von "Lock".

Folgerichtig erfolgt die Kopplung zwischen dem antriebsseitigen Spannelement und dem werkzeugseitigen Spannelement über die Bajonett-Verbindung im Sinne von "Druck-Drehen-Rasten" bzw. "Push-Turn-Lock". Da eine solche Bajonett-Verbindung mit relativ großem Spiel zwischen einerseits der Aufnahmenut und andererseits dem in der Aufnahmenut geführten und hierin gehaltenen Zapfen ausgerüstet werden kann, lässt sich die lösbare Verbindung zwischen dem werkzeugseitigen und dem antriebsseitigen Spannelement auch dann herstellen und wieder lösen, wenn die Bajonett-Verbindung mehr oder minder signifikante Verschmutzungen aufweist. Hierzu ist es lediglich erforderlich, die zuvor bereits beschriebenen Arbeitsschritte zu absolvieren. Das gelingt insgesamt werkzeuglos und auch ohne die Beaufschlagung eines möglicherweise blockierenden oder schwer zu betätigenden Betätigungsknopf, so dass gegenüber dem Stand der Technik nach der WO 2017/220338 A1 signifikante Vorteile bei der Bedienung insbesondere in verschmutztem Zustand beobachtet werden. Hierin sind die wesentlichen Vorteile zu sehen.

Die das werkzeugseitige Spannelement beaufschlagenden Feder ist in der Regel als das antriebsseitige Spannelement umschließende Schraubenfeder ausgebildet. Auf diese Weise liegt die Schraubenfeder mit einem umlaufenden kreisförmigen Schenkel an dem werkzeugseitigen Spannelement an und behindert bei der Herstellung der Bajonett-Verbindung weder seine Axialbewegung entlang der Axialnut noch die Radialbewegung entlang der Radialnut. Das gilt insbesondere für den Fall, dass die fragliche Schraubenfeder aus Metall und insbesondere Stahl hergestellt ist und das werkzeugseitige Spannelement beispielsweise aus Kunststoff oder ebenfalls Metall gefertigt ist. Denn dann werden besonders geringe Reibungen in diesem Zusammenhang beobachtet. Dabei sorgt die fragliche Feder insgesamt dafür, dass das werkzeugseitige Spannelement nach seiner Vereinigung mit dem antriebsseitigen Spannelement mit seinem Zapfen in der Sacknut bzw. Rastnut gehalten wird.

Eine besonders vorteilhafte Ausführungsform ist dadurch gekennzeichnet, dass das antriebsseitige Spannelement mit drei über seinen Umfang verteilt angeordneten Aufnahmenuten ausgerüstet ist. Dadurch kommt es zwischen den beiden Spannelementen zu einer gegenseitigen Kopplung unter Berücksichtigung von drei auf diese Weise realisierten Fixpunkten, die sich nämlich dadurch einstellen, dass das werkzeugseitige Spannelement typischerweise ebenfalls über drei über seinen Umfang verteilt angeordnete Zapfen zum Eingriff in die Aufnahmenuten verfügt. Denn sobald diese Zapfen bei der Vereinigung der beiden Spannelemente in die Rastnuten eingreifen, wird das werkzeugseitige Spannelement gegenüber dem antriebsseitigen Spannelement an drei Fixpunkten ausgerichtet, so dass die Bürsten des Spannelementes insgesamt statisch bestimmt ist und etwaige Kippbewegungen nicht beobachtet werden. Das ist für die anschließende rotative Beaufschlagung besonders wichtig.

Nach erfindungsgemäßer Ausgestaltung definieren das werkzeugseitige Spannelement und das Drehwerkzeug eine Baueinheit. Dadurch ist eine besonders einfache Montage und Lagerhaltung gewährleistet. Zu diesem Zweck mag das betreffende werkzeugseitige Spannelement als das Drehwerkzeug zumindest teilweise radial und axial umschließender Haltekäfig ausgebildet sein, wie dies grundsätzlich im Stand der Technik nach der WO 2017/220338 A1 im Detail beschrieben wird. Das gilt selbstverständlich nur beispielhaft und ist keinesfalls zwingend.

Darüber hinaus hat es sich in diesem Kontext bewährt, wenn der Haltekäfig als Kreisringkäfig mit umfangsseitigen Axialstegen ausgerüstet ist, welche das betreffende Drehwerkzeug übergreifen. Die Axialstege sind dabei typischerweise so ausgelegt, dass sie das Drehwerkzeug im Bereich von Aussparungen übergreifen. Außerdem ist der Haltekäfig erfindungsgemäß und folglich das werkzeugseitige Spannelement insgesamt mit der Zentralbohrung für den hierin hineinreichenden Zapfen ausgerüstet. D. h., der eine bzw. die mehreren Zapfen erstrecken sich radial in Richtung auf einen Mittelpunkt der Zentralbohrung des werkzeugseitigen Spannelementes bzw. des an dieser Stelle vorgesehenen Haltekäfigs. Schließlich ist die Auslegung noch so getroffen, dass das antriebsseitige Spannelement zusammen mit einem Stoppmittel an eine Drehantriebseinheit angeschlossen ist. Mit Hilfe der Drehantriebseinheit kann das antriebsseitige Spannelement in Rotationen versetzt werden. Gleiches gilt für das hiermit lösbar gekoppelte werkzeugseitige Spannelement inklusive dem Drehwerkzeug, weil das werkzeugseitige Spannelement und das Drehwerkzeug in der Regel eine Baueinheit definieren. Mit Hilfe des Stoppmittels kann nun das Drehwerkzeug dahingehend beaufschlagt werden, dass mit seiner Hilfe beispielsweise einzelne Borsten abgebremst werden und nach Passieren des Stoppmittels mit erhöhter Bewegungsenergie auf eine zu bearbeitende Oberfläche treffen. Das wird im Detail in der EP 1 834 733 B1 der Anmelderin beschrieben, auf die in diesem Zusammenhang ausdrücklich verwiesen sei.

Im Ergebnis wird eine rotativ antreibbare Drehwerkzeugeinrichtung zur Verfügung gestellt, die durch ihre Bajonett-Verbindung zwischen werkzeugseitigem Spannelement und antriebsseitigen Spannelement eine lösbare Verbindung zur Verfügung stellt, die sich werkzeuglos einfach und schnell herstellen und wieder aufheben lässt. Das gilt auch und insbesondere unter Berücksichtigung rauer Arbeitsbedingungen und ausdrücklich auch dann, wenn einzelne oder beide der genannten Spannelemente mehr oder minder verschmutzt sind. Hierin sind die wesentlichen Vorteile zu sehen.

Im Folgenden wird die Erfindung anhand einer lediglich ein Ausführungsbeispiel darstellenden Zeichnung näher erläutert; es zeigen:

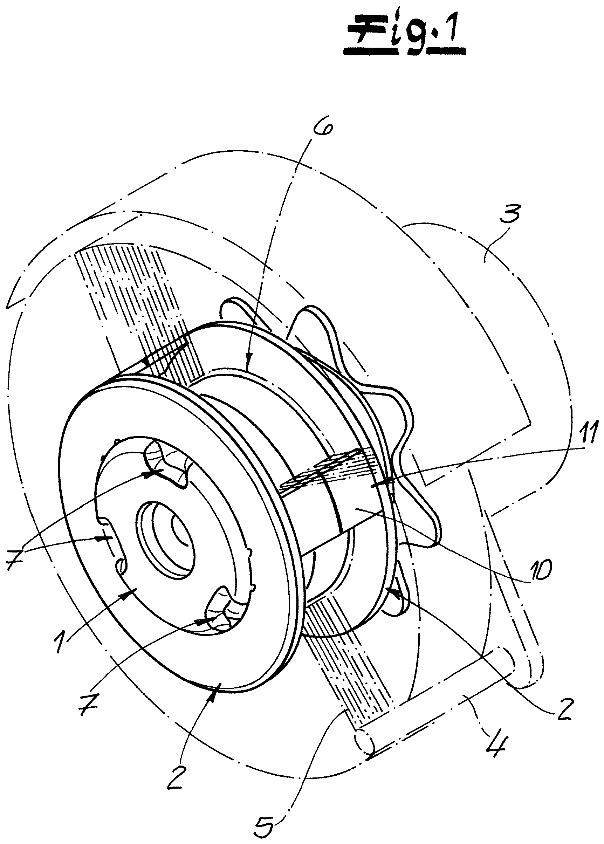

- Fig. 1: die rotativ antreibbare Drehwerkzeugeinrichtung in einer perspektivischen Ansicht,
- Fig. 2: den Gegenstand der Fig. 1 in Seitenansicht,

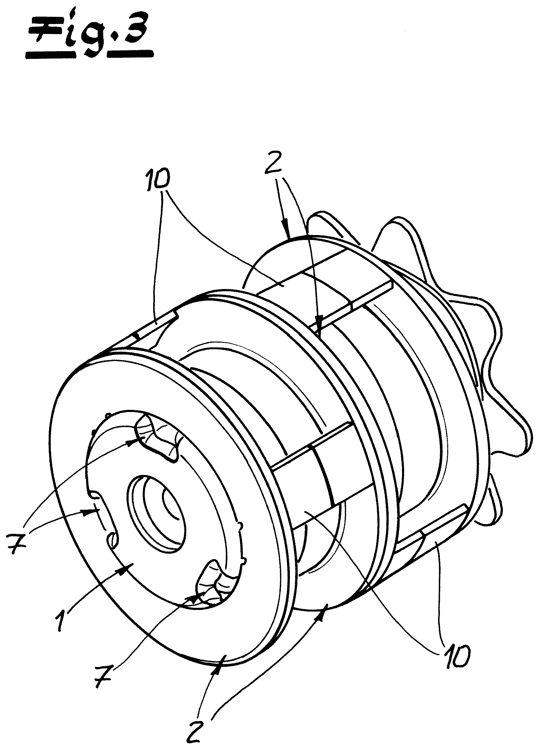

- Fig. 3: eine abgewandelte Ausführungsform der Drehwerkzeugeinrichtung nach den Figuren 1 und 2,
- Fig. 4: das antriebsseitige Spannelement für die Drehwerkzeugeinrichtung nach der Fig. 3 und
- Fig. 5: das werkzeugsseitige Spannelement für die Drehwerkzeugeinrichtung nach den Figuren 3 und 4.

In den Figuren ist eine rotativ antreibbare Drehwerkzeugeinrichtung dargestellt. Bei der Drehwerkzeugeinrichtung handelt es sich im Ausführungsbeispiel und vorteilhaft um eine Rotationsbürstenwerkzeugeinrichtung bzw. ein Rotationsbürstenwerkzeug. Die gezeigte Einrichtung verfügt in ihrem grundsätzlichen Aufbau über einen Werkzeughalter 1, 2, der mit wenigstens einem antriebsseitigen Spannelement 1 und einem werkzeugseitigen Spannelement 2 ausgerüstet ist.

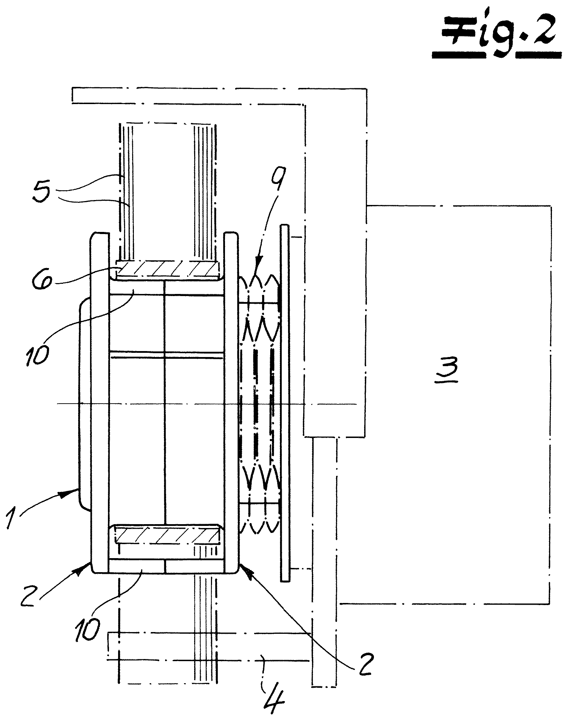

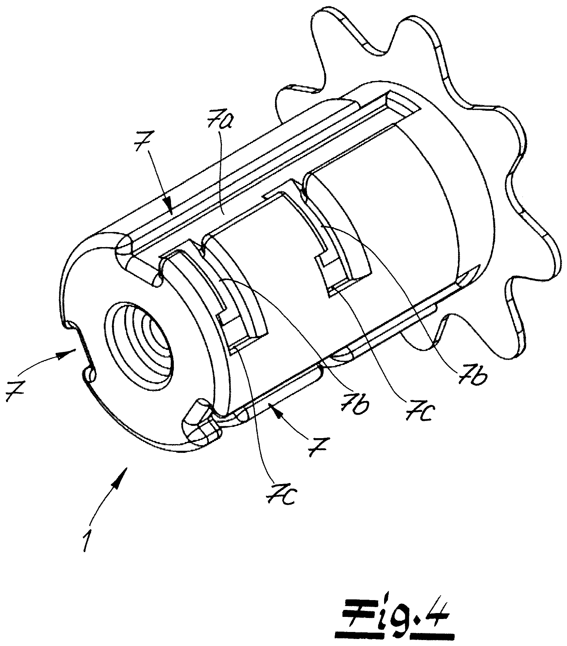

Bei dem antriebsseitigen Spannelement 1 handelt es sich im Rahmen des Ausführungsbeispiels um einen zylindrischen und in der Fig. 4 im Detail dargestellten Halteadapter 1, der mit Hilfe einer in der Fig. 2 lediglich angedeuteten Drehantriebseinheit 3 in Rotationen versetzt wird. Dazu mag die Drehantriebseinheit 3 eine zentrale Bohrung des antriebsseitigen Spannelementes bzw. des zylindrischen Halteadapters 1 durchgreifen bzw. in diese eingreifen. Man erkennt anhand der Fig. 2, dass zu diesem Zweck und nach dem Ausführungsbeispiel das antriebsseitige Spannelement 1 zusammen mit einem Stoppmittel 4 an die fragliche Drehantriebseinheit 3 angeschlossen ist.

Das Stoppmittel 4 mag zu diesem Zweck mit einem Drehwerkzeug 5, 6 wechselwirken. Bei dem Drehwerkzeug 5, 6 handelt es sich im Ausführungsbeispiel um eine Ringbürste 5, 6, die sich im Detail aus einem Bürstenband 6 und an das Bürstenband 6 angeschlossenen und demgegenüber radial abstehenden Borsten 5 zusammensetzt. Das kann man am besten anhand der Seitenansicht bzw. teilweisen Schnittdarstellung gemäß der Fig. 2 nachvollziehen.

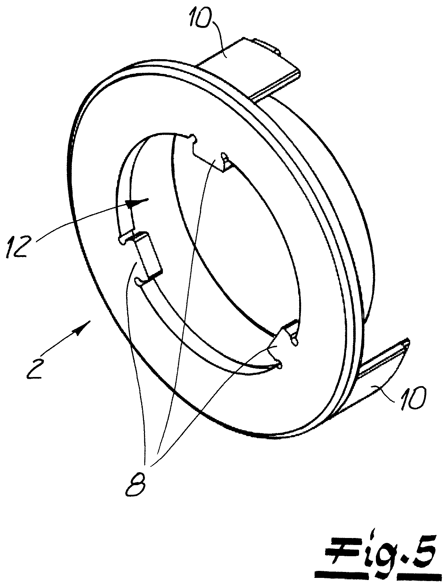

Erfindungsgemäß ist nun die Auslegung so getroffen, dass das antriebsseitige Spannelement 1 und das werkzeugseitige Spannelement 2 lösbar miteinander verbunden sind und das fragliche Drehwerkzeug 5, 6 aufnehmen und halten. Zur lösbaren Verbindung der beiden Spannelemente 1, 2 ist eine Bajonett-Verbindung 7, 8 realisiert, die man am besten anhand eines Vergleiches der Figuren 4 und 5 nachvollziehen kann.

Tatsächlich ist zu diesem Zweck das antriebsseitige zylinderförmige Spannelement 1 mit wenigstens einer Aufnahmenut 7 ausgerüstet. Demgegenüber verfügt das werkzeugseitige Spannelement 2 über zumindest einen in die Aufnahmenut 7 eingreifenden Zapfen 8, den man anhand der Fig. 5 nachvollziehen kann. Grundsätzlich kann auch umgekehrt vorgegangen werden. In diesem Fall ist das antriebsseitige Spannelement 1 mit dem besagten Zapfen 8 ausgerüstet, wohingegen das werkzeugseitige Spannelement 2 die Aufnahmenut 7 aufweist.

Anhand der Darstellung in der Fig. 4 lässt sich am besten nachvollziehen, dass die Aufnahmenut 7 zumindest zweiteilig ausgebildet ist. Im Rahmen des Ausführungsbeispiels verfügt die Aufnahmenut 7 über eine 3-teilige Gestaltung. Tatsächlich setzt sich die Aufnahmenut 7 aus einer Axialnut 7a und einer hieran anschließenden Radialnut 7b zusammen. Außerdem ist noch eine endseitige Rastnut 7c vorgesehen, in welche die Radialnut 7b endseitig übergeht. Bei der Rastnut 7c handelt es sich um eine parallel zur Axialnut 7a verlaufende Sacknut, d. h. eine Nut, die mit einem endseitigen Anschlag ausgerüstet ist. Zum weiteren grundsätzlichen Aufbau gehört dann noch eine insbesondere in der Fig. 2 nachvollziehbare Feder 9.

Bei der Feder 9 handelt es sich um eine das antriebsseitige Spannelement 1 umschließende Schraubenfeder 9. Die Feder 9 bzw. Schraubenfeder sorgt dafür, dass das werkzeugseitige Spannelement 2 nach seiner Vereinigung mit dem antriebsseitigen Spannelement 1 mit seinem zugehörigen Zapfen 8 in der Rastnut 7c gehalten wird. Zu diesem Zweck ist das antriebsseitige Spannelement 1 in der Regel mit drei über seinen Umfang verteilt angeordneten Aufnahmenuten 7 ausgerüstet. Entsprechend verfügt das werkzeugseitige Spannelement 2 über drei über seinen Umfang verteilt angeordnete Zapfen 8 zum Eingriff in die zugehörigen Aufnahmenuten 7.

Darüber hinaus ist die Auslegung so getroffen, dass das werkzeugseitige Spannelement 2 und das Drehwerkzeug 5, 6 eine Baueinheit 2, 5, 6 definieren, wie man am besten anhand der Seitenansicht bzw. teilweisen Schnittdarstellung in der Fig. 2 nachvollziehen kann. Außerdem ist das betreffende werkzeugseitige Spannelement 2 zu diesem Zweck als das Drehwerkzeug 5, 6 zumindest teilweise radial und axial umschließender Haltekäfig 2 ausgebildet. Nach dem Ausführungsbeispiel ist der Haltekäfig 2 mehrteilig ausgebildet, setzt sich nämlich aus mehreren miteinander verbindbaren Spannelementen 2 zusammen. Der Haltekäfig 2 ist nach dem Ausführungsbeispiel als Kreisringkäfig mit umfangsseitigen Axialstegen 10 ausgelegt, welche das Drehwerkzeug 5, 6 übergreifen. Zu diesem Zweck verfügt das Drehwerkzeug 5, 6 über Aussparungen 11, in denen die betreffenden Axialstege 10 angeordnet sind.

Der Haltekäfig 2 bzw. allgemein das werkzeugseitige Spannelement 2 ist insgesamt und entsprechend der Darstellung in der Fig. 5 mit einer Zentralbohrung 12 ausgerüstet, in welche der eine bzw. die drei über den Umfang verteilt angeordneten Zapfen 8 hineinreichen. Dazu sind die Zapfen 8 jeweils radial in Richtung auf einen Mittelpunkt der Zentralbohrung 12 ausgerichtet.

Um nun das werkzeugseitige Spannelement 2 mit dem antriebsseitigen Spannelement 1 zu vereinigen, welches seinerseits an die Drehantriebseinheit 3 angeschlossen ist, wird so vorgegangen, dass das werkzeugseitige Spannelement bzw. der Haltekäfig 2 mit seiner Zentralbohrung 12 auf das antriebsseitige Spannelement 1 bzw. den zylindrischen Zapfen aufgesteckt wird, und zwar dergestalt, dass hierbei die einzelnen in die Zentralbohrung 12 vorspringenden Zapfen 8 in die zugehörigen Aufnahmenuten 7 eingreifen. Dabei gleiten die Zapfen 7 entlang der jeweiligen Axialnut 7a. Das geschieht gegen die Kraft der Feder 9.

Sobald der betreffende Zapfen 8 die Radialnut 7b erreicht hat, kann das werkzeugseitige Spannelement 2 im Anschluss an die zunächst erfolgende Schubbewegung durch eine Drehbewegung gegenüber dem antriebsseitigen Spannelement 1 verriegelt werden. Am Ende dieser Drehbewegung weicht der betreffende Zapfen 8 in die Rastnut 7c - beaufschlagt durch die Feder 9 - aus, so dass nach Herstellen der Bajonett-Verbindung 7, 8 das werkzeugseitige Spannelement 2 und mit ihm das Drehwerkzeug 5, 6 bzw. die an dieser Stelle realisierte Baueinheit 2, 5, 6 gegenüber dem antriebsseitigen Spannelement 1 verriegelt ist. Für ein etwaiges Lösen des werkzeugseitigen Spannelementes 2 gegenüber dem antriebsseitigen Spannelement 1 muss der beschriebene Vorgang umgekehrt durchlaufen werden.

## Patentansprüche

1. Rotativ antreibbare Drehwerkzeugeinrichtung, insbesondere Rotationsbürstenwerkzeug, mit einem Werkzeughalter (1, 2) mit wenigstens einem antriebsseitigen Spannelement (1) und einem werkzeugseitigen Spannelement (2), wobei
beide Spannelemente (1, 2) lösbar miteinander verbunden sind und ein Drehwerkzeug (5, 6) aufnehmen und halten, wobei ferner
das werkzeugseitige Spannelement (2) und das antriebsseitige Spannelement (1) über eine Bajonett-Verbindung (7, 8) miteinander gekoppelt sind, und wobei
das antriebsseitige Spannelement (1) wenigstens eine Aufnahmenut (7) und das werkzeugseitige Spannelement (2) zumindest einen in die Aufnahmenut (7) eingreifenden Zapfen (8) aufweist, oder umgekehrt,
**dadurch gekennzeichnet, dass**
das werkzeugseitige Spannelement (2) und das Drehwerkzeug (5, 6) eine Baueinheit (2, 5, 6) definieren und das betreffende Spannelement (2) dazu als das Drehwerkzeug (5, 6) zumindest teilweise radial und axial umschließender Haltekäfig (2) ausgebildet ist, wobei
der Haltekäfig (2) eine Zentralbohrung (12) mit dem hierin hineinreichenden Zapfen (8) aufweist.

2. Einrichtung nach Anspruch 1, **dadurch gekennzeichnet, dass** die Aufnahmenut (7) zumindest zweiteilig mit Axialnut (7a) und hieran anschließender Radialnut (7b) ausgebildet ist.

3. Einrichtung nach Anspruch 2, **dadurch gekennzeichnet, dass** die Radialnut (7b) endseitig in eine Rastnut (7c) übergeht.

4. Einrichtung nach Anspruch 3, **dadurch gekennzeichnet, dass** die Rastnut (7c) als parallel zur Axialnut (7a) verlaufende Sacknut ausgebildet ist.

5. Einrichtung nach einem der Ansprüche 1 bis 4, **dadurch gekennzeichnet, dass** wenigstens eine das werkzeugseitige Spannelement (2) beaufschlagende Feder (9) vorgesehen ist.

6. Einrichtung nach Anspruch 5, **dadurch gekennzeichnet, dass** die Feder (9) als das antriebsseitige Spannelement (1) umschließende Schraubenfeder (9) ausgebildet ist.

7. Einrichtung nach Anspruch 5 oder 6, **dadurch gekennzeichnet, dass** die Feder (9) das werkzeugseitige Spannelement (2) nach seiner Vereinigung mit dem antriebsseitigen Spannelement (1) mit seinem Zapfen (8) in der Rastnut (7c) hält.

8. Einrichtung nach einem der Ansprüche 1 bis 7, **dadurch gekennzeichnet, dass** das antriebsseitige Spannelement (1) mit drei über seinen Umfang verteilt angeordneten Aufnahmenuten (7) ausgerüstet ist.

9. Einrichtung nach Anspruch 8, **dadurch gekennzeichnet, dass** das werkzeugseitige Spannelement (2) drei über seinen Umfang verteilt angeordnete Zapfen (8) zum Eingriff in die Aufnahmenuten (7) aufweist, oder umgekehrt.

10. Einrichtung nach einem der Ansprüche 1 bis 9, **dadurch gekennzeichnet, dass** der Haltekäfig (2) als Kreisringkäfig mit umfangsseitigen Axialstegen (10) ausgerüstet ist, welche das Drehwerkzeug (5, 6) übergreifen.

11. Einrichtung nach Anspruch 10, **dadurch gekennzeichnet, dass** die Axialstege (10) das Drehwerkzeug (5, 6) im Bereich von Aussparungen (11) übergreifen.

12. Einrichtung nach einem der Ansprüche 1 bis 11, **dadurch gekennzeichnet, dass** das antriebsseitige Spannelement (1) zusammen mit einem Stoppmittel (4) an eine Drehantriebseinheit (3) angeschlossen ist.

## Claims

1. A rotationally driveable turning tool device, in particular a rotary brush tool, with a tool holder (1, 2) with at least one clamping element (1) on the drive side and one clamping element (2) on the tool side, wherein
both clamping elements (1, 2) are detachably connected to each other and receive and hold a turning tool (5, 6), wherein furthermore
the clamping element (2) on the tool side and the clamping element (1) on the drive side are coupled to each other via a bayonet connection (7, 8), and wherein
the clamping element (1) on the drive side has at least one locating groove (7) and the clamping element (2) on the tool side at least one tab (8) engaging the locating groove (7), or vice versa,
**characterised in that**
the clamping element (2) on the tool side and the turning tool (5, 6) define a unit (2, 5, 6) and the clamping element (2) in question is designed as a holding cage (2) enclosing the turning tool (5, 6) at least partially radially and axially, wherein
the holding cage (2) has a central bore (12) with the tab (8) extending into it.

2. The device according to claim 1, **characterised in that** the locating groove (7) is designed in at least two parts with an axial groove (7a) and a radial groove (7b) connected thereto.

3. Device according to claim 2, **characterised in that** the radial groove (7b) transitions into a snap-in groove (7c) at the end.

4. The device according to claim 3, **characterised in that** the snap-in groove (7c) is designed as a pocket groove running parallel to the axial groove (7a).

5. The device according to any one of claims 1 to 4, **characterised in that** at least one spring (9) applied to the clamping element (2) on the tool side is provided

6. The device according to claim 5, **characterised in that** the spring (9) is designed as a coil spring (9) enclosing the clamping element (1) on the drive side.

7. The device according to claim 5 or 6, **characterised in that** the spring (9) holds the clamping element (2) on the tool side with its tab (8) in the snap-in groove (7c) after its union with the clamping element (1) on the drive side.

8. The device according to any one of claims 1 to 7, **characterised in that** the clamping element (1) on the drive side is provided with three locating grooves (7) arranged distributed over its circumference.

9. The device according to claim 8, **characterised in that** the clamping element (2) on the tool side has three tabs (8) arranged distributed over its circumference for engaging in the locating grooves (7), or vice versa.

10. The device according to any one of claims 1 to 9, **characterised in that** the holding cage (2) is provided as a circular ring cage with axial webs (10) at the circumference, which extend over the turning tool (5, 6).

11. The device according to claim 10, **characterised in that** the axial webs (10) extend over the turning tool (5, 6) in the area of recesses (11).

12. The device according to any one of claims 1 to 11, **characterised in that** the clamping element (1) on the drive side together with a stop means (4) is connected to a rotary drive unit (3).

## Revendications

1. Système d'outil rotatif pouvant être entraîné en rotation, en particulier un outil à brosse rotatif, avec un porte-outil (1, 2) avec au moins un élément de serrage (1) du côté entraînement et un élément de serrage (2) du côté outil, sachant que
les deux éléments de serrage (1, 2) sont reliés entre eux de façon amovible et logent et maintiennent un outil rotatif (5, 6), sachant en plus que
l'élément de serrage (2) du côté outil et l'élément de serrage (1) du côté entraînement sont couplés l'un à l'autre par un raccord de type baïonnette (7, 8) et sachant que
l'élément de serrage (1) du côté entraînement comporte au moins une rainure de réception (7) et l'élément de serrage (2) du côté outil au moins un tenon (8) venant en prise dans la rainure de réception (7), ou inversement,
**caractérisé en ce que**
l'élément de serrage (2) du côté outil et l'outil rotatif (5, 6) définissent une unité modulaire (2, 5, 6) et l'élément de serrage concerné (2) est constitué à cet effet sous la forme d'une cage de maintien (2) entourant au moins en partie radialement et axialement l'outil rotatif (5, 6), sachant que
la cage de maintien (2) comporte un alésage central (12) avec le tenon (8) faisant saillie dedans.

2. Système selon la revendication 1, **caractérisé en ce que** la rainure de réception (7) est constituée au moins en deux parties avec une rainure axiale (7a) et une rainure radiale (7b) s'y raccordant.

3. Système selon la revendication 2, **caractérisé en ce que** la rainure radiale (7b) passe en extrémité dans une rainure d'encliquetage (7c).

4. Système selon la revendication 3, **caractérisé en ce que** la rainure d'encliquetage (7c) est constituée en tant que rainure borgne passant parallèlement à la rainure axiale (7a).

5. Système selon l'une quelconque des revendications 1 à 4, **caractérisé en ce qu'**au moins un ressort (9) sollicitant l'élément de serrage (2) du côté outil est prévu.

6. Système selon la revendication 5, **caractérisé en ce que** le ressort (9) est constitué en tant que ressort hélicoïdal (9) entourant l'élément de serrage (1) du côté entraînement.

7. Système selon la revendication 5 ou 6, **caractérisé en ce que** le ressort (9) maintient l'élément de serrage (2) du côté outil après son raccordement à l'élément de serrage (1) du côté entraînement avec son tenon (8) dans la rainure d'encliquetage (7c).

8. Système selon l'une quelconque des revendications 1 à 7, **caractérisé en ce que** l'élément de serrage (1) du côté entraînement est doté de trois rainures de réception (7) disposées réparties sur sa périphérie.

9. Système selon la revendication 8, **caractérisé en ce que** l'élément de serrage (2) du côté outil comporte trois tenons (8) disposés répartis sur sa périphérie pour venir en prise dans les rainures de réception (7), ou inversement.

10. Système selon l'une quelconque des revendications 1 à 9, **caractérisé en ce que** la cage de maintien (2) est dotée en tant que cage annulaire de nervures axiales périphériques (10), lesquelles empiètent sur l'outil rotatif (5, 6).

11. Système selon la revendication 10, **caractérisé en ce que** les nervures axiales (10) empiètent sur l'outil rotatif (5, 6) dans la zone des évidements (11).

12. Système selon l'une quelconque des revendications 1 à 11, **caractérisé en ce que** l'élément de serrage (1) du côté entraînement est raccordé ensemble avec un moyen d'arrêt (4) à une unité d'entraînement rotative (3).
